# EUROPEAN PATENT APPLICATION

(11) **EP 0 696 536 A1**
(43) Date of publication of application: **14.02.1996**
(21) Application number: 95110875.2
(22) Date of filing: 12.07.1995
(51) Int. Cl.: B62J 1/28, B63B 35/79

(54) **Supporting device**

(30) Priority: 11.08.1994 DE 4428507; 11.08.1994 DE 4428521
(71) Applicant: Hetemov, Vladimir, Sofia 1000 (BG)
(72) Inventor: Hetemov, Vladimir, Sofia 1000 (BG)

(57) **Abstract**

A supporting device fitting on the pelvis of the wearer and in connection with an object by means of an attachement part and a hook (5) of a front hook plate (4), has two padded, annular, adjustable, attachable/detachable, fitting around the thighs and buttocks of the wearer belts (2), which are directly connected to one another or via a back piece (1), carrying a substantially rigid back panel (6), connected at the front via said panel (4) by looping through the apertures (7).

## Description

The invention relates to a supporting device for a cyclist. In another type with a different construction the invention relates to supporting device for a cyclist or a windsurfer.

An important element of bicycles or similar locomotion means driven with muscle power represents the crank lever, which transforms this power into rotation of the crank. A significant drawback of this type of locomotion is that the muscle power transfered to the pedals is substantially limited by the weight of the cyclist. Since the leg of the driver functions as a knee lever, a precondition for an effective functioning is that one end of the knee lever remains immobilized or supported.
This precondition is only partially met by the common bicycles. The upper end of the knee lever, the pelvis/femur articulation is immobilized by the weight of the cyclist. When driving uphill the rotation resistance increases and the upper end of the knee lever tends to move up and backwards obliging the the cyclist to drive upright. To avoid this drawback some bicycles have been equiped with saddles with back support and their front crank assembly have been moved to the front and up. This solution is expensive, complicated and effective only,when the cyclist is seated and the crank axle is located to the front at the same height as the saddle. This position of the cyclist is possible in ideal driving conditions (a flat terrain). Another try to solve this problem presents the DE 9115280 U1 or the FR 90 06210 which support a part of the body or a part of the pelvis but not the upper end of the knee lever,which is the femur/pelvis articulation. In order to provide an effective support,the pelvis should be immobilized as a whole not only the upper side , because the load of the upper end of the femur will force the pelvis to pivot, straining in this way the back muscles and the vertebral column.

It is an object of this invention to avoid these drawbacks and secure a better use of the cyclist muscle power by providing a complete support to his pelvis not only when seated, but in all driving positions (upright, Oblique-upright etc...) The driver's pelvis fits as a whole in a padded supporting device, which in front attached to the bicycle frame moves relatively free, responding to the pelvis movement of the cyclist and on the other hand providing a good back support from all directions corresponding to the driving positions of the cyclist.

Another advantage of the invention is,that the resulting load is optimally transferred to the whole pelvis.The invention takes in consideration,that the pelvis consists of three bones connected with a cartillage.Solutions which provide only a part support( waist part of the pelvis) will not only cause the pelvis to pivot, but will strain the cartillaginous connection of the three bones of the pelvis. The use of a back plate and a front hook plate made of stiff material provides an optimal transfer of the load, minimizing the lateral pressure of the cyclist's pelvis.
The hook/loop attachement allows a quick reaction in case of an emergency.
Furthermore the invention presents a cheap to manufacture pruduct, which is independent, efficient, reliable and versatile.
The use of seat part of the supporting device provides a countering of the load applied by the upper end of the femur and on the other hand prevents that the device slips up or turns around the body of the wearer.

The invention will be further described by way of exemple in reference to the following drawings in which
Fig. 1 is a side view of a cyclist wearing a supporting device connected by means of an attachement part to the bicycle frame,
Fig. 2 is a second view of the cyclist in which the attachement point at the bicyle frame is a roll which slides on a rail,
Fig. 3 is a view of a supporting device without the attachement part,
Fig. 4 is another embodiment of the invention without hook plate and attachemnt part,
Fig. 5 is a view of a hook plate,
Fig. 6 is additional to the original priority applications

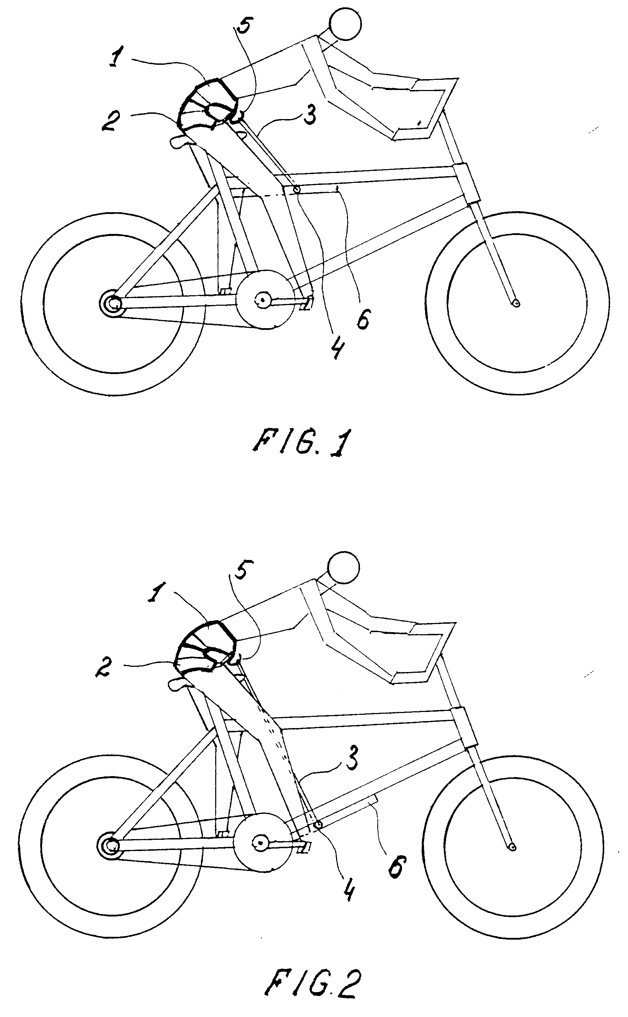

Referring to Figs. 1 and 2 of the accompanying drawings there is illustrated a bicycle with a cyclist,wearing the supporting device connected to a adjustable roll 4 in a rail 6 at the bicycle frame, by means of the hook 5 and the attachement part 3. The device gives an effective support to the whole pelvis via the waist part 1 and the seat part 2.

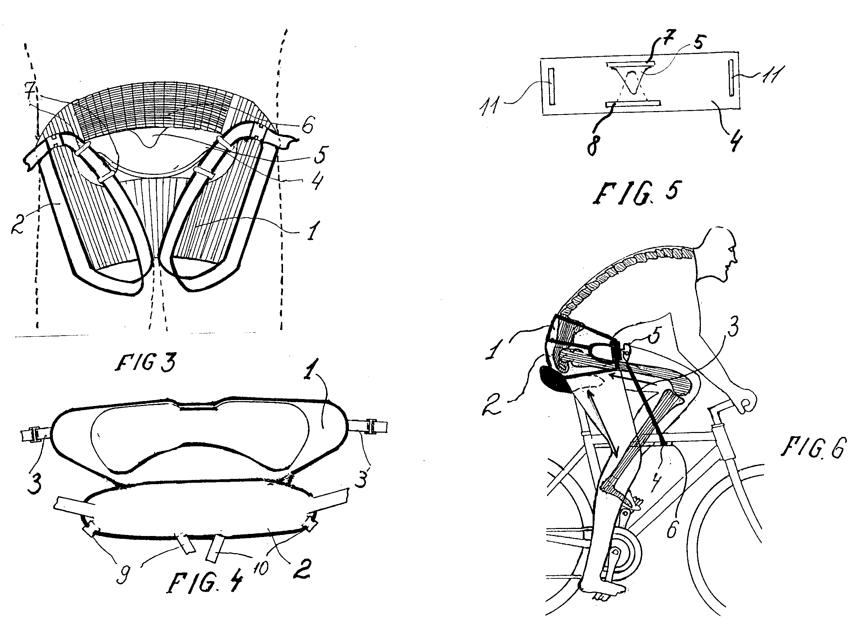

Referring to Fig.3 there is illustrated a first type of a supporting device. The supporting function is secured by means of two padded, annular, adjustable, attachable/detachable,fitting around the thighs and buttocks belts 2 , which are directly connected to one another or via a back piece 1, carrying a substatially rigid back panel 6 and in front looping through apertures 7 of the front hook plate 4 having a hook 5. This type supporting device provides a very good load transfer and a simplified buckling, especially if the apertures 7 are formed as medially opened hooks. It could be used as a harness for windsurfing.

Referring to Fig. 4 there is illustrated a second type of a supporting device fitting around the pelvis of the wearer, comprising a waist part 1, with straps 3 and one piece rigid back panel , a seat part 2, with straps 9, 10. All straps are adjustable and attachable/detachable. The seat and waist parts are connected with the front hook panel (not illustrated).
This type of construction provides a full and omnidirectional support of the pelvis/femur joint, preventing the device to slip up the body of the cyclist, or to rotate around the body of the cyclist.
Referring to Fig. 5 there is illustrated a hook plate comprising slot appapertures 7, 8 and slot apertures 11 for the waist, seat and eventually a shoulder straps,and a hook 5. The plate is convex formed and the hook is located on the protruding face of the plate. The length of the plate corresponds substantially to the width of the wearer's pelvis and contributes to a better transfer of the load.

### Notice

Fig. 6 is additional,referring to the original priority application DE P 44 28 507.8.
It has no additional contents concerning the description and the Claims of the invention . It has been added with the purpose to illustrate the hidden bone mechanic of the cyclist and herewith will be a help by the examination that the positive differences of the invention compared with the background art are better interpreted.

## Claims

1. A supporting device fitting on the pelvis of a cyclist and connected to the bicycle frame via an attachement part (3), characterized in that it consists of a waist part(1),adjustable straps (3) and a rigid back panel , a seat part(2)with adjustable thigh straps (9,10),which attachably/detachably carry a front hook panel with a hook (5) and apertures (7,8) and (11), where waist straps, seat straps and shoulder straps loop through.Fig 4,5

2. A supporting device fitting on the pelvis of a cyclist and connected to the bicycle frame via an attachement part (3), characterized in that it has two padded,annular, adjustable, attachable/detachable, fitting around the thighs and buttocks of the wearer belts (2), which are directly connected to one another or via a back piece (1), carrying a substantially rigid back panel (6), connected at the front via a hook panel(4) carrying a hook (5),looping through the apertures (7) and having an optional shoulder strap. Fig 3

3. A supporting device as claimed in Claims 1 and 2 , charecterized in that the length of said front hook panel corresponds substantially to the breadth of the cyclist's pelvis.

4. A supporting device as claimed in Claim 1 and 2, charactein that the length of said rigid back panel corresponds substantially to the breadth of the cyclist's pelvis.

5. A supporting device as claimed in Claims 1 and 2 , characterized in that said parts and elements of the device are included in a piece of clothing of the cyclist.

6. A supporting device fitting on the pelvis of a cyclist or a windsurfer connected via an attachement part to a bicycle frame or to a boom of a windsurfing board and a hook of a front hook plate, characterized in that it has two padded, annular, adjustable attachable/detachable fitting around the thighs and buttocks of the wearer belts (2), which are directly connected to one another or via a back piece(1) and at the front looping through the apertures (7) of a plate(4) Fig. 3.
